# EUROPEAN PATENT SPECIFICATION

(11) **EP 4 318 985 B1**
(45) Date of publication and mention of the grant of the patent: **07.05.2025**
(21) Application number: 22189047.8
(22) Date of filing: 05.08.2022
(51) Int. Cl.: H04J 3/06, H04J 3/14, H02J 13/00

(54) **CO-ORDINATED RESYNCHRONIZATION OF CLOCKS IN POWER GRID SYSTEMS**
KOORDINIERTE RESYNCHRONISIERUNG VON UHREN IN ENERGIENETZSYSTEMEN
RESYNCHRONISATION COORDONNÉE D'HORLOGES DANS DES SYSTÈMES DE RÉSEAU ÉLECTRIQUE

(43) Date of publication of application: 07.02.2024
(73) Proprietor: Hitachi Energy Ltd, 8050 Zürich (CH)
(72) Inventor: Pind, Henrik, 723 51 Västerås (SE); Salj, Johan, 632 22 Eskilstuna (SE); Byman, Carl, 724 82 Västerås (SE)
(74) Representative: AWA Sweden AB

(56) References cited:
- EP-A1- 2 688 240
- WO-A1-2020/236164
- US-A1- 2014 044 133
- YASUYUKI KOZAKAI ET AL: "Keeping clock accuracy on a master clock failure in substation network", PRECISION CLOCK SYNCHRONIZATION FOR MEASUREMENT CONTROL AND COMMUNICATION (ISPCS), 2010 INTERNATIONAL IEEE SYMPOSIUM ON, IEEE, PISCATAWAY, NJ, USA, 27 September 2010 (2010-09-27), pages 25 - 29, XP031780883, ISBN: 978-1-4244-5978-0
- PUHM ANDREAS ET AL: "Synchronizing an IEEE 1588 slave clock over both paths of a redundant Ethernet system", 2016 IEEE INTERNATIONAL SYMPOSIUM ON PRECISION CLOCK SYNCHRONIZATION FOR MEASUREMENT, CONTROL, AND COMMUNICATION (ISPCS), IEEE, 4 September 2016 (2016-09-04), pages 1 - 6, XP032971419, DOI: 10.1109/ISPCS.2016.7579507
- INGRAM DAVID M E ET AL: "Quantitative Assessment of Fault Tolerant Precision Timing for Electricity Substations", IEEE TRANSACTIONS ON INSTRUMENTATION AND MEASUREMENT, IEEE, USA, vol. 62, no. 10, 1 October 2013 (2013-10-01), pages 2694 - 2703, XP011526776, ISSN: 0018-9456, [retrieved on 20130911], DOI: 10.1109/TIM.2013.2263673
- ANDREA BONDAVALLI ET AL: "Master Failure Detection Protocol in Internal Synchronization Environment", IEEE TRANSACTIONS ON INSTRUMENTATION AND MEASUREMENT, IEEE, USA, vol. 62, no. 1, 1 January 2013 (2013-01-01), pages 4 - 12, XP011475475, ISSN: 0018-9456, DOI: 10.1109/TIM.2012.2209916
- "IEEE Standard for a Precision Clock Synchronization Protocol for Networked Measurement and Control Systems;IEEE Std 1588-2008 (Revision of IEEE Std 1588-2002) ED - Anonymous", IEEE STANDARD; [IEEE STANDARD], IEEE, PISCATAWAY, NJ, USA, 24 July 2008 (2008-07-24), pages c1 - 269, XP017604130, ISBN: 978-0-7381-5400-8

## Description

### Technical Field

The present invention relates to power grid systems. More particularly, the present invention relates to a method for synchronizing clocks in power grid devices.

### Background

Power grids, such as alternating current (AC) power grids, may comprise a large number of power grid devices, e.g., in the power (sub)stations, transmission network, etc. Many of these devices may require their operations to be synchronized in some way.

For example, a fault detection system may register a fault if phase angles are determined to deviate by more than a threshold amount. A deviation may be determined by comparing simultaneously-obtained phase angle outputs from measuring devices arranged in different locations in a power grid. The phase angle outputs may be timestamped such that like-timestamped outputs are compared.

In such an example, if one of the measuring devices is operating out of synchronization with another one of the measuring devices, this may lead to faulty operations, e.g., an incorrect alignment of samples when comparing data from multiple devices, leading to faulty angle deviation. Thus, a phase angle deviation exceeding the threshold amount may be erroneously detected, and a fault response may be unnecessarily activated.

As an alternative to such an example, other values to be timestamped by measurement, control, or other devices may be used in various parts of a power grid system, for which a synchronization of operations is important for their proper function.

For a variety of reasons, a clock signal used by power grid devices may change, which will require a resynchronization process to occur so that the power grid devices may continue to operate properly.

Some power grid devices (e.g., so-called 'station clocks' in substations) may be in communication with an external clock signal source, such as a Global Positioning System (GPS) clock signal, which may be considered as a high-precision source for a clock signal. Other power grid devices may follow this clock signal provided by the station clock in order to ensure that they are in synchronous operation with each other.

However, for many possible reasons, there may be a change (e.g. a jump) in the clock signal received and distributed by the station clock. This may occur, for example, as a result of a loss, and then a regaining, of communications with the external clock signal source. Therefore, the station clock may need to provide a new clock signal to any devices which rely on said station clock for their synchronization.

The devices that follow the clock signal provided by the station clock may then (re-)calibrate or (re)synchronize based on the new clock signal from the station clock. Depending on the particular device, and how much the synchronization of the internal clock thereof differs from such a new clock signal, it may take a varying amount of time for different devices to (re)calibrate.

The following documents disclose prior art of synchronization of power grid devices:
WO2020/236164 A1 (VIT TALL LLC [US]; 2020-11-26).
YASUYUKI KOZAKAI ET AL: "Keeping clock accuracy on a master clock failure in substation network", PRECISION CLOCK SYNCHRONIZATION FOR MEASUREMENT CONTROL AND COMMUNICATION (ISPCS), 2010 INTERNATIONAL IEEE SYMPOSIUM ON, IEEE, PISCATAWAY, NJ, USA, 27 September 2010 (2010-09-27), pages 25-29, ISBN: 978-1-4244-5978-0.
PUHM ANDREAS ET AL: "Synchronizing an IEEE 1588 slave clock over both paths of a redundant Ethernet system", 2016 IEEE INTERNATIONAL SYMPOSIUM ON PRECISION CLOCK SYNCHRONIZATION FOR MEASUREMENT, CONTROL, AND COMMUNICATION (ISPCS), IEEE, 4 September 2016 (2016-09-04), pages 1-6; DOI: 10.1109/ISPCS.2016.7579507.
EP2688240 A1 (ZTE CORP [CN], 2014-01-22) discloses a method of synchronization of a clock slave linked to at least two clock sources, which exchange with the clock slave link detection message and detection feedback message.

### Summary

It is realised as part of the present disclosure that, during a resynchronization of power grid devices after a new clock signal has been obtained by a station clock, for whatever reason said new clock signal may arise, some devices may adjust to following the new clock signal before others. Therefore, there is a risk that devices may be significantly out of synchronization with each other during the resynchronization process, especially if the new clock signal is significantly different to a clock signal previously followed by a device.

As such, according to an aspect of the present disclosure, there is provided a method for synchronizing clocks in power grid devices that overcomes at least some of the above-mentioned problems.

In particular, there is provided a computer-implemented method for synchronizing clocks in power grid devices, wherein the method is performed by a clock-leader unit.

A clock-leader unit may be a designated device for orchestrating/coordinating a resynchronization process among a plurality of devices, which may be referred to as 'clock-follower units', as they follow the clock-leader unit's instructions. The clock-leader unit may be implemented as software and/or hardware, and may be incorporated in a station clock device (i.e. a 'time master' responsible for receiving and distributing clock signals) or in one of the power grid devices in communication with the station clock.

The method performed by the clock-leader unit may comprise receiving an indication of a new clock signal for a plurality of clock-follower units to follow, for use in synchronizing clocks of the plurality of clock-follower units. As used herein, to 'follow' a clock signal may refer to synchronizing, in a maintained and ongoing manner, an internal clock of a device (e.g., an internal oscillator) with the clock signal, such that the followed clock signal governs the time operations of the device.

The clock signal provided by a time master may be derived from an external clock signal source, such as using a GNSS receiver or the like. For example, a time master may be a station clock in a substation, which may have an IRIG time code B (IRIG-B) timing board installed therein. The time master may provide the clock signal to devices using a pulse-per-second (PPS) signal, a precision time protocol (PTP) signal, IRIG-B or another suitable time synchronization signal.

The indication of a change in the clock signal may be received from the time master (e.g. a station clock) of the power grid system in which the power grid devices are comprised. For example, the clock signal may be provided from a time master as a PPS signal, and/or a PTP signal (e.g. using ptp4I or other PTP implementations) may contain information relating to an event that could affect the PPS signal. Alternatively, the indication may be received from one of the power grid devices themselves, should a change or jump in the clock signal be 'noticed' first by such a device. That is, in some cases, the clock signal may be interrupted or otherwise change without a PTP signal providing the information that the change will happen.

In response to the indication of a new clock signal being received at a clock-leader unit, the method may further comprise sending, by said clock-leader unit, an instruction to the plurality of clock-follower units to calibrate based on the new clock signal. The instruction may be multicast or broadcast, e.g., depending on whether the clock-leader unit is 'aware' of how many/which clock-follower units are participating in the resynchronization process.

It will be appreciated that a device's status as a clock-leader unit may be pre-determined/pre-assigned or may be dynamically determined such that a clock-leader unit may be elected in response to the incidence of a new clock signal. The clock-leader unit may be selected based on, for example, a proximity to an external clock signal source, e.g., a minimum communication delay with a time master.

As used herein, to 'calibrate' a clock in a power grid device acting as a clock-follower unit may refer to a process by which an internal clock of the device is adjusted or otherwise brought into alignment with a provided clock signal.

For example, a clock-follower unit may comprise an internal clock (e.g. an oscillator) which oscillates with a period *P,* and *kP,* where *k* is some multiplier, can be determined such that *kP* is equal to a pulse rate, index count interval, a second, etc., as defined by a clock signal (for example provided as a PPS signal). The value for *k* may be changed until *kP* satisfies such a condition, which may involve control algorithms such as PID control algorithms or similar.

At some point after sending the instruction to the plurality of clock-follower units to calibrate based on the new clock signal, the method may further comprise obtaining a confirmation that the plurality of clock-follower units has completed calibration. The confirmation may be directly or indirectly obtained, depending on the implementation.

In some examples, obtaining a confirmation that the plurality of clock-follower units has completed calibration may comprise waiting for a delay period to expire, the delay period being configured to ensure that each of the clock-follower units has time to complete calibration.

The delay period may be predetermined, for example as 30 seconds, 60 seconds, or more or less, depending on the amount of time anticipated for all of the clock-follower units to complete calibration of their internal clocks. As mentioned above, the amount of time taken to perform such a calibration may vary from device to device and, thus, the delay period may be selected to be at least as long as the longest expected time to calibrate a clock-follower unit's internal clock.

According to such an approach, the instruction from the clock-leader unit to the plurality of clock-follower units to calibrate based on the new clock signal may be broadcast, such that it is not required to know how many clock-follower units are relying upon the time master (providing the new clock signal) for their clock signals. Moreover, it is advantageously not required that the clock-follower units comprise transmitters, as only a receiver is required. Thus, the amount of communication between the power grid devices during the resynchronization process may be reduced.

In some examples, obtaining a confirmation that each of the clock-follower units has completed calibration may comprise receiving indications from each of the clock-follower units that they have completed calibration.

For example, when a clock-follower unit receives the instruction to calibrate based on the new clock signal, the clock-follower unit may start calibrating substantially immediately thereafter. Then, when the clock-follower unit determines that its internal clock is properly in synchronization with the new clock signal - that is to say that it has calibrated based on the new clock signal - the clock-follower unit may then generate an indication that it has completed calibration and provide this indication to the clock-leader unit.

According to an example, an indication received from a clock-follower unit to indicate a completed calibration may comprise an identifier of the clock-follower unit sending the indication. The clock-leader unit may maintain a list or register of clock-follower units for which it is responsible for their resynchronization process. Thus, confirmation that the plurality of clock-follower units has completed calibration may comprise determining that all of the registered clock-follower units have provided an indication that they have completed calibration.

It will be appreciated that, instead of such a register, a clock-leader unit may instead determine a number *N* of clock-follower units that rely on a particular time master (with which the clock-leader unit is associated) for their clock signal. The clock-leader unit may then obtain a confirmation that the plurality of clock-follower units has completed calibration by determining that N clock-follower units have sent indications that they have completed calibration.

In some examples, if an indication that a clock-follower unit has completed calibration includes an identifier of said clock-follower unit, then data may be collected in respect of how long the clock-follower unit required to calibrate its internal clock based on the new clock signal. This data may be collected for all clock-follower units and may be used to inform, for example, the decision as to which device is elected as a potential future clock-leader unit, a length of time for a delay period, etc.

According to the presently described method, in response to obtaining the confirmation that the plurality of clock-follower units has completed calibration, the clock-leader unit may send an instruction to the clock-follower units to follow the new clock signal.

Therefore, once it is confirmed that all of the clock-follower units are ready to transition to following the new clock signal, a co-ordinated instruction is sent (e.g., broadcast, multicast, or otherwise) to all of the clock-follower units. Hence, even if some clock-follower units had long been calibrated to the new clock signal (relative to the slowest-calibrating clock-follower unit) by the time the instruction to start following the new clock signal is sent, they do not transition to following the new clock signal until all of the clock-follower units are ready to do so. It may therefore be ensured according to the present approach that no substantial differences in synchronization between power grid devices occurs during a resynchronization process because this process is orchestrated by the clock-leader unit.

As such, it follows that a number of potential faults or errors resulting from a lack of synchronization between power grid devices can be reduced and thus the 'up-time' and reliability of a power grid system containing such devices may be advantageously improved.

During calibration, a clock-follower unit may not be following any clock signal at all. Instead, the clock-follower unit may enter what can be referred to as 'hold-over' mode, wherein time operations for the clock-follower unit (e.g., timestamping) may be performed using the internal clock of the clock-follower unit while the internal clock is not following any clock signal.

The clock-follower unit may comprise two internal clocks such that, from the perspective of a device acting as a clock-follower unit, a method for time synchronizing the power grid device may comprise receiving an instruction to calibrate based on a new clock signal, and performing time operations using a first internal clock.

The first internal clock may be in the aforementioned 'hold-over' mode such that it is not following any clock signal. However, as the first internal clock may be appropriately configured to sustain a near-consistent internal clock signal for a short time, the first internal clock may remain substantially synchronized with an old clock signal, which the first internal clock may have been following before the clock-follower unit received an instruction to calibrate based on a new clock signal.

In some examples, in response to receiving the indication of a new clock signal, the clock-leader unit may instruct each of the clock-follower units to stop following an old clock signal. Alternatively, this instruction may be implicit in the instruction to calibrate based on the new clock signal. That is, the clock-follower unit may follow, with the first internal clock, an old clock signal and, in response to receiving an instruction to calibrate based on a new clock signal, stop following the old clock signal.

In some examples, instead of entering 'hold-over' mode, the first internal clock may be following an old clock signal. That is, a time master may be configured to provide two clock signals: an old clock signal and a new clock signal. When a new clock signal is detected, the time master may provide this new clock signal in addition to the old clock signal, the old clock signal being the clock signal provided to devices before the arrival of the new clock signal.

The clock-follower unit may calibrate a second internal clock based on the new clock signal, for example whilst the time operations for the clock-follower unit are being performed using the first internal clock.

As mentioned above, calibrating the second internal clock may comprise adjusting the second internal clock (e.g., an oscillation or multiplier thereof), or otherwise bringing the second internal clock into alignment with the new clock signal provided from a time master.

When the second internal clock is calibrated to the new clock signal, the clock-follower unit can be considered as having completed calibration, and may send an indication of this to the clock-leader unit and/or wait until receipt of an instruction to follow the new clock signal.

Then, in response to receiving the instruction to follow the new clock signal, the clock-follower unit may perform time operations using the second internal clock. For example, the clock-follower unit may transition from performing time operations (e.g., timestamping) using the first internal clock to performing time operations using the second internal clock.

A plurality of clock-follower units may be configured to perform this method such that, when a clock-leader unit sends (e.g., broadcasts, multicasts, or otherwise) the instruction to follow the new clock signal, the transition to following the new clock signal (e.g., performing time operations using an internal clock calibrated to said new clock signal) may happen substantially simultaneously for all clock-follower units in said plurality.

Therefore, as mentioned above, it may be ensured that the clock-follower units are not out of synchronization with each other even in the event of needing to resynchronize to a new clock signal being provided from a time master.

It will be appreciated that the new clock signal may not always substantially differ from the old signal, at least to an extent that an uncoordinated or non-simultaneous transition to the new clock signal could risk errors or faults.

Thus, the clock-leader unit may instruct one or more the plurality of clock-follower units to abort the resynchronization process in response to determining that the new clock signal has a time difference relative to the old clock signal that is less than a threshold amount. The threshold may be, for example, 1 microsecond (µs), 4 µs, 16 µs, or less or more, depending on the implementation. This determination may happen on a device-to-device basis for each of the clock-follower units, in some examples.

By aborting the resynchronization process, a clock-follower unit may instead be allowed to drift from the old clock signal to the new clock signal, and the difference therebetween may be expected to be small enough (i.e., less than a threshold amount) such that a difference in speed of drift between two clock-follower units is not likely to cause issues due to a lack of mutual synchronization.

According to some example implementations, instructing the clock-follower units to follow the new clock signal may comprise determining a transitioning time for the clock-follower units transition to following the new clock signal, and communicating the transitioning time to the plurality of clock-follower units such that the clock-follower units transition to following the new clock signal simultaneously at the transitioning time.

Therefore, a difference in time caused by, for example, the length of time for the instruction to follow the new clock signal to reach different clock-follower units, may be accounted for. That is, the transitioning time may be selected far enough ahead in the future for it to be ensured that all of the clock-follower units have received the instruction to follow the new clock signal. It will be appreciated that the transition time may be selected to be not too far into the future as to risk the internal clocks in 'hold-over' mode falling substantially out of synchronization with each other.

The transitioning time may be communicated in terms of a PPS clock signal (e.g., a message equivalent to 'transition at the next pulse in the PPS signal') or in terms of a PTP clock signal, which may be in universal co-ordinated time (UTC) format (e.g., a message equivalent to 'transition at 12:00:00 UTC').

It will be appreciated that the communication of a transitioning time in the instruction to follow the new clock signal may be preferred in implementations with many (e.g., more than 20) clock-follower units.

The above described method may be executed by a data processing device such as a processor, which may be included in one or more power grid devices, each having a clock. The method may be realised as a set of instructions for executing on a computer or a similar data processing device, and may be stored as a computer program or a computer-readable medium, such that a computer executing said instructions may be caused to carry out the method.

Moreover, the same principle, as described between devices, could be applied also internally in a device, between different modules thereof.

In any event, numerous advantages, some of which are described above, may be realized through the coordination of devices acting as clock-follower units by a device acting as a clock-leader unit, during a resynchronization process. These advantages, as well as others, may be further appreciated through a description of specific illustrated embodiments, all of which fall within the scope of the present disclosure.

### Brief Description of the Figures

One or more embodiments will be described, by way of example only, and with reference to the following figures, in which:
Figure 1 schematically shows a power grid system according to an embodiment of the present disclosure;
Figures 2A and 2B schematically show alternative configurations of a plurality of power grid devices according to embodiments of the present disclosure;
Figure 3 illustrates a method for synchronizing clocks in power grid devices, for performance by a clock-leader unit;
Figure 4 illustrates a method for time synchronizing a power grid device, for performance by a clock-follower unit; and
Figures 5A to 5H schematically illustrate the time synchronization of a power grid device.

### Detailed Description

The present disclosure is described in the following by way of a number of illustrative examples. It will be appreciated that these examples are provided for illustration and explanation only and are not intended to be limiting on the scope of the disclosure.

Furthermore, although the examples may be presented in the form of individual embodiments, it will be recognized that the present disclosure also covers combinations of the embodiments described herein.

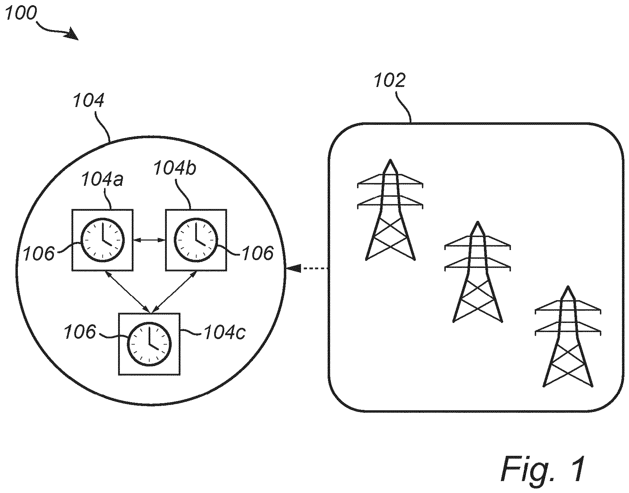

Figure 1 schematically shows a power grid system 100 comprising a power grid 102 and a plurality of power grid devices 104a, 104b, 104c (collectively referred to as power grid devices 104 or simply 'devices 104') which collectively implement the power grid 102. The power grid 102 may, for example, comprise a generation network for generating electricity and a transmission network for transmitting generated electricity to electrical loads.

The power grid devices 104 may be installed at any part of the power grid 102. For example, the devices 104 may form part of a substation or a transmission substation. The devices 104 may be configured to perform time operations such as timestamping measurements (e.g., measurements of current, voltage, phase angles, etc.), contributing to converter control, or other such operations that are time-sensitive.

The devices 104 may each comprise a clock 106 internal thereto. The clock 106 may comprise an oscillator such as a piezoelectric crystal or ceramic resonator or a similar hardware and/or software clock. The clocks 106 in the devices 104 may be used to perform time operations such that the rate or timing with which time operations are performed by a device 104 is governed by its clock 106.

Some power grid devices 104 may act as time masters, meaning that they are treated as an authority among the devices 104 in respect of what time the clocks 106 should follow. Devices 104 that act as time masters may be in communication with an external clock signal source such as a GNSS signal or similar.

Power grid devices, for example 104a and 104b that may not have a direct communication with an external clock signal, may have a clock signal provided to them from another device, for example 104c, that is acting as a time master.

The clocks 106 in all devices 104 may thus all be in synchronization with each other, thereby allowing the time operations performed by said devices 104 to be temporally consistent.

However, sometimes a clock signal provided by a time master device 104c may change, such as jumping forwards or backwards, which may be caused by a loss of communication with an external clock signal source or some other reason. In such cases, the new clock signal will need to be distributed from the time master device 104c to the other devices 104a and 104b so that they can resynchronize their respective clocks 106 based on the new clock signal.

During such a resynchronization process, it is possible that some devices, e.g., device 104a, may synchronize their clock 106 with the new clock signal faster than other devices, e.g., device 104b. Therefore, there is a risk that devices 104a and 104b will perform time operations using clocks 106 which are not synchronized with each other. This may lead to errors or faults, or false-positive detections thereof.

Accordingly, a scheme is described herein that assigns a device 104 as being either a 'clock-leader' - effectively a time shift manager for a group of devices - or a 'clock-follower' - effectively a time consumer that obeys the instructions of the clock-leader unit (or 'clock-leader').

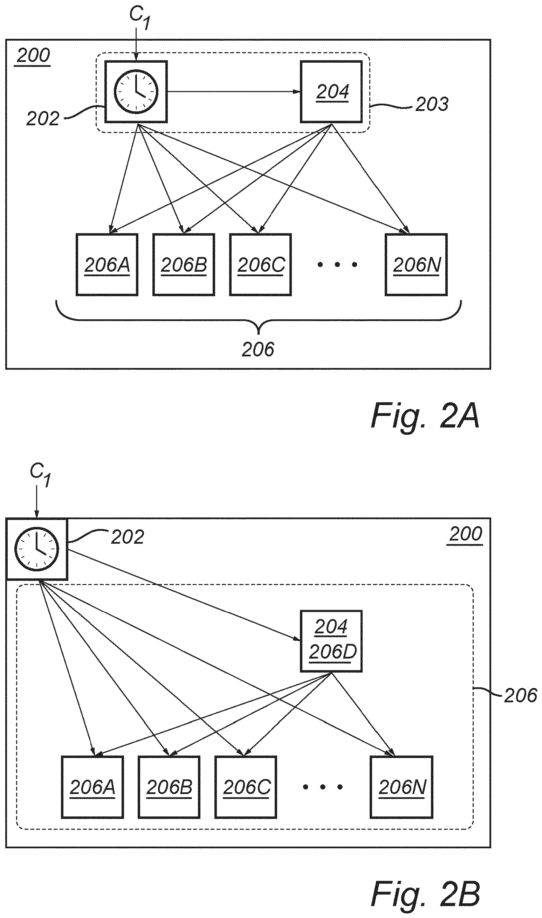

Figures 2A and 2B show some alternative configurations of a plurality of power grid devices 202, 204, 206, in an example power grid subsystem of a substation 200.

The substation 200 may comprise a station clock 202 acting as a time master for the substation 200. The station clock 202 may receive a clock signal C₁ from an external clock signal source (not shown) such as a GNSS satellite or the like. The station clock 202 may then distribute this clock signal C₁ amongst a plurality of devices 206A, 206B, 206C...206N, collectively referred to as 'devices 206'.

The devices 206 may be computing devices having CPUs and I/O boards, and may be configured to perform control or monitoring operations for one or more converters in the substation 200, for example.

As discussed above in relation to figure 1, the devices 206 may each comprise an internal clock (not shown) that follows the clock signal C₁ provided to them by the station clock 202. That is, the internal clocks of the devices 206 may regularly or in an ongoing fashion synchronize their internal clocks according to the clock signal C₁ provided by the station clock 202, wherein the clock signal C₁ may be provided as a pulse per second (PPS) signal, a precision time protocol (PTP) signal, or another type of clock signal.

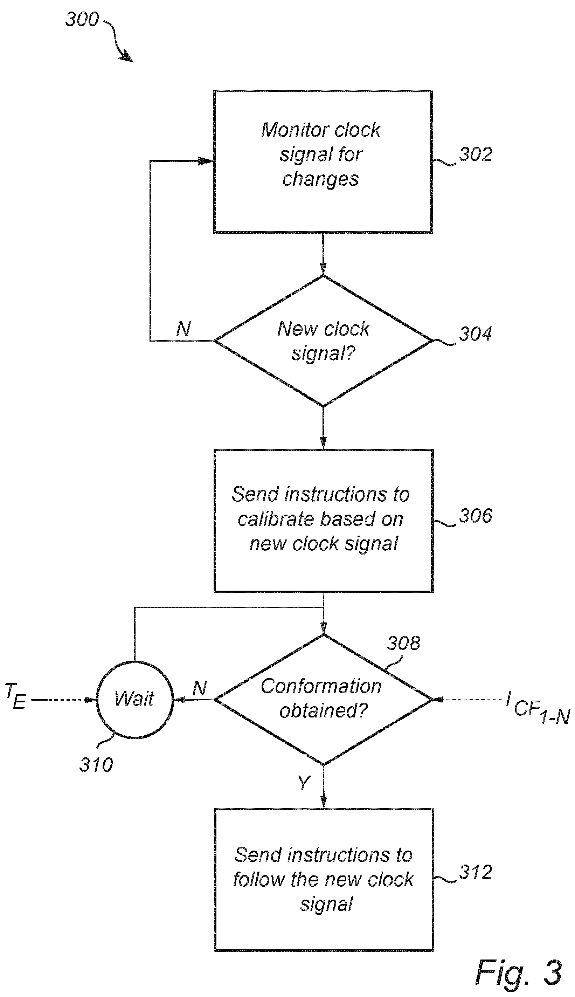

The method 300 illustrated in figure 3 may be discussed alongside the discussion of figures 2A and 2B for ease of understanding. A station clock 202 or a designated or (to-be-)elected clock-leader unit 204, may monitor 302 for changes in the clock signal C₁. In some examples, one of the devices 206 may detect an unstable or changeable clock signal C₁ and may signal to the responsible monitor, i.e. the clock leader unit 204, for such changes.

A change in the clock signal C₁ may be signalled in an incoming PTP signal, or may be noticed first by one of the devices 206, in some examples. The change in the clock signal C₁ may have many causes and may comprise a jump forwards or backwards in time, for example to correct the alignment of the station clock 202 with an external clock signal source.

At step 304 of the method 300, a new clock signal (e.g., C₂, not shown) may be detected (step 304: Y), which may trigger the election of a clock-leader unit 204 if one has not already been pre-selected or if a dedicated unit such as the enhanced station clock 203 shown in figure 2A is provided.

For example, as shown in figure 2B, one of the devices 206, i.e. device 206D, may be elected as a clock-leader unit 204. This election may be temporary or persistent thereafter, and may be based on one or more of a proximity to the station clock 202 (e.g., in terms of communication latency), a central position amongst the group of devices 206 (e.g., for equal latency in communications therewith), or some other factor(s).

The devices 206 not elected as being a clock-leader unit 204 may be referred to as clock-follower units 206. That is, in figure 2A, all of the devices 206 are clock-follower units 206 because the clock-leader unit 204 is a separate component incorporated into the enhanced station clock 203. However, in figure 2B, the device 206D is elected as being the clock-leader unit 204 such that the remaining devices 206A, 206B, 206C...206N are clock-follower units.

Following in the method 300, after a new clock signal is detected (in step 304: Y), the clock-leader unit 204 may send 306 an instruction to the plurality of clock-follower units 206 to calibrate based on a new clock signal.

The clock-leader unit 204 may then determine whether a confirmation has been obtained as to whether the plurality of clock-follower units 206 have completed calibration, see step 308 in the illustrated method 300.

Obtaining 308 a confirmation that the plurality of clock-follower units has completed calibration may comprise waiting 310 until either expiry of a timer T_{E} or until indications I_{CF_1→N} have been received from all of the N clock-follower units 206 which rely on the station clock 202 for their clock signal, i.e., all of the clock-follower units 206 for which the clock-leader unit 204 is responsible for during the resynchronization process.

Once the confirmation has been obtained (step 308: Y), the clock-leader unit 204 may send 312 an instruction to the plurality of clock-follower units 206 to follow the new clock signal.

The clock-follower units 206 may transition to following the new clock signal as soon as they receive the instruction from the clock-leader unit, or the instruction from the clock-leader unit may further comprise information about a transitioning time at which the transition should take place. In the former case, a device 206D may be selected such that the latency in communications between it and other devices 206 is substantially even for all devices 206, and hence this device 206D may be elected as a clock-leader unit 204 such that the clock-follower units 206 receive instructions therefrom at substantially a same time.

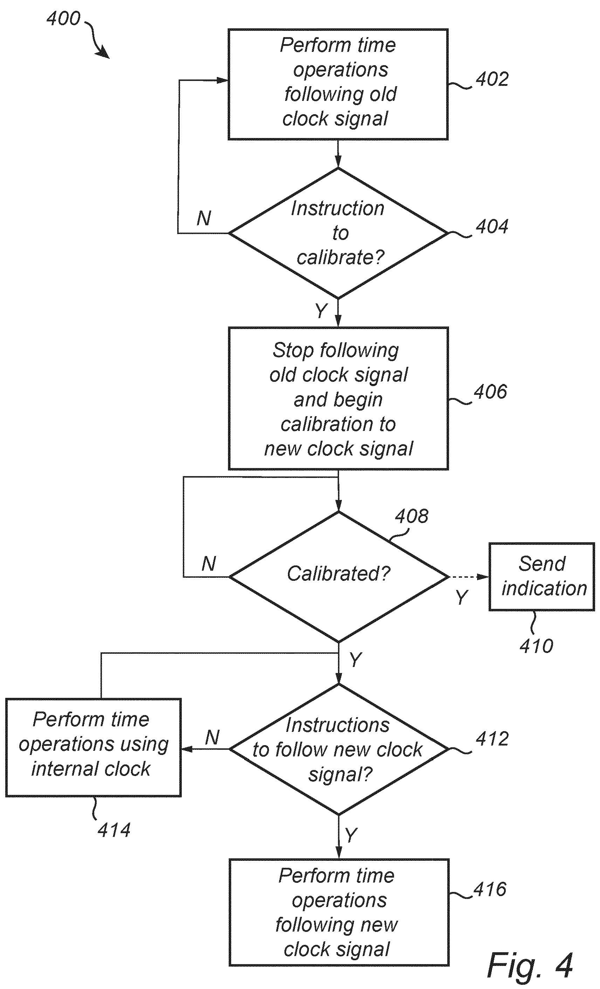

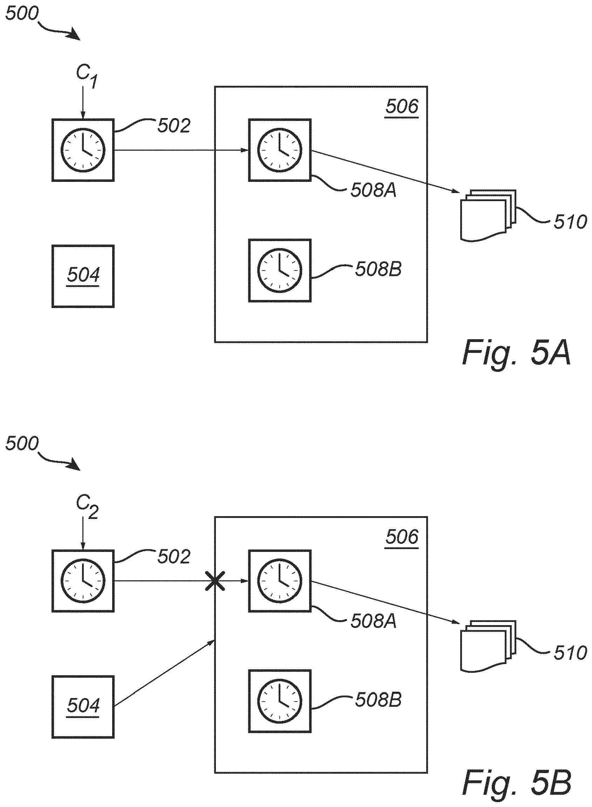

Figure 4 and figures 5A to 5H illustrate an example execution of the previously described method 300 from the perspective of a clock-follower unit 506. That is, figure 4 illustrates a method 400 for performance by a clock-follower unit 506 to synchronize a clock 508A, 508B therein.

In the illustrated arrangement 500 of figure 5A, the arrangement 500 comprises a clock-follower unit 506 having a first internal clock 508A and a second internal clock 508B, which may in reality be separately operable portions of a same clock.

The clock-follower unit 506 may be in data communication with a station clock 502 (similar in its function to the station clock 202 discussed above) and a clock-leader unit 504 (similar in its function to the clock-leader unit 204 discussed above). The clock-follower unit 506 may be connected to the station clock 502 and the clock-leader unit 504 via any suitable wired or wireless data connections, and using any suitable data communication protocol or language.

The clock-follower unit 506 may be part of a device responsible for timestamping records 510, wherein the records 510 may, for example, be measurements of a phase angle of an AC voltage signal output or input into a converter or converter controller, or some other measurement or determination relevant for power grid operations. The timestamps applied to the records 510 may, for example, be in UTC format or another suitable time format for use in, for example, comparing with other records having a matching timestamp (e.g., derived from a similar device) as part of a control or fault detection system.

As illustrated in figure 5A, the method 400 may begin with the clock-follower unit 506 timestamping the records 510 using the first internal clock 508A. The first internal clock 508A, whilst being used for said timestamping, may be following a first clock signal C₁ (which will then be referred to as an "old" clock signal) provided by the station clock 502.

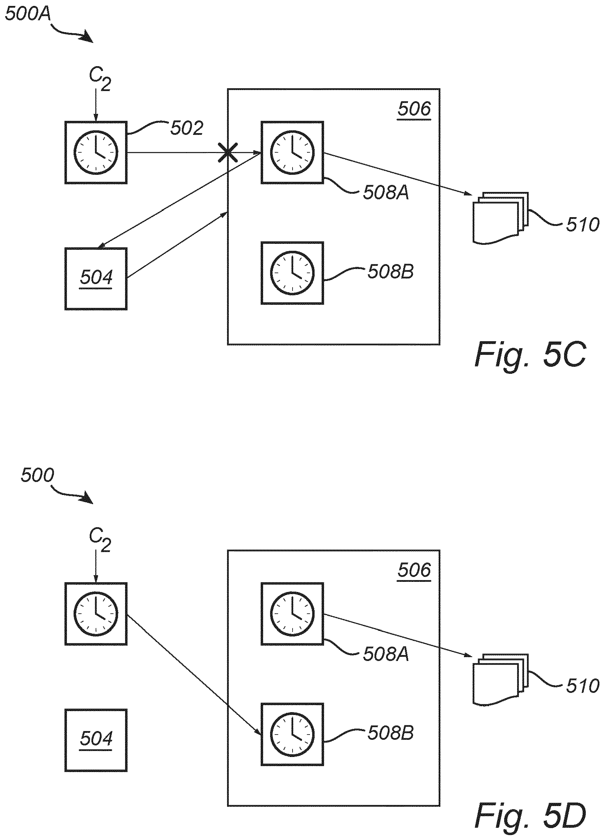

At some point, and as discussed above, a new clock signal C₂ incoming into and being provided by the station clock 502 may be detected. In figure 5B, it is illustrated that the station 502 notifies the clock-leader unit 504 of this change. However, in an alternative arrangement 500A illustrated in figure 5C, the clock-follower unit 506 itself (e.g., using the first internal clock 508A) may detect a changed clock signal C₂, which may appear as unstable time, and may notify the clock-leader unit 504.

In response to detecting the new clock signal C₂, the clock-leader unit 504 may send an instruction to the clock-follower unit 506 to calibrate based on the new clock signal C₂. The clock-follower unit 506 may monitor for such instructions, as illustrated in step 404 of the method shown in figure 4.

In response to receiving the instruction to calibrate (step 404: Y) the clock-follower unit 506 may stop following the old clock signal C₁ and begin calibration based on the new clock signal C₂, as shown in figure 5D. In some examples, the clock-leader unit 504 may explicitly instruct the clock-follower unit 506 to stop following the old clock signal C₁, and in other examples this may instead be implicit.

The first internal clock 508A may then decouple from the clock signal provided by the station clock 502, and may enter what can be referred to as 'hold-over' mode, whereby the first internal clock 508A continues to oscillate as before but no longer maintains a synchronization based on an input clock signal from the station clock 502.

During such a hold-over mode, the first internal clock 508A may be substantially aligned with the old clock signal C₁ and may remain in near-synchronization therewith because of the inherent inertia of the first internal clock 508A. Thus, at least for some period, different clock-follower units may be in substantial synchronization with each other, despite being in hold-over mode. However, it will be appreciated that, the longer the first internal clocks 508A of clock-follower units are not following a clock signal, the more they may fall out of synchronization with each other.

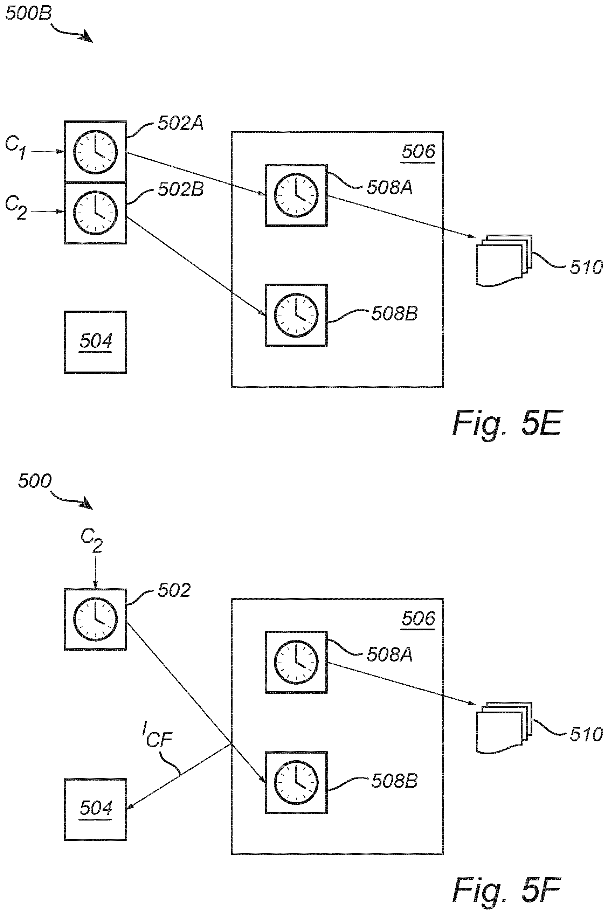

In some examples, and as illustrated as an alternative arrangement 500B in figure 5E, the first internal clock 508A of the clock-follower unit 506 may not stop following the old clock signal C₁. Instead, the station clock 502 may be configured to provide two clock signals C₁ and C₂, such that the new clock signal C₂ may be provided in parallel with the old clock signal C₁, at least until the clock-follower unit(s) 506 has calibrated to the new clock signal C₂.

Whilst the second internal clock 508B is calibrating to the new clock signal C₂, time operations may be performed using the first internal clock 508A. That is, the first internal clock 508A may be used to provide timestamps for the records 510 during the calibration.

Then, once the second internal clock 508B has completed calibration, meaning that it is suitably synchronized to the station clock 502 and ready to follow the new clock signal C₂, the clock-follower unit 506 may send an indication I_{CF} to the clock-leader unit 504 that it has completed calibration, as shown in figure 5F.

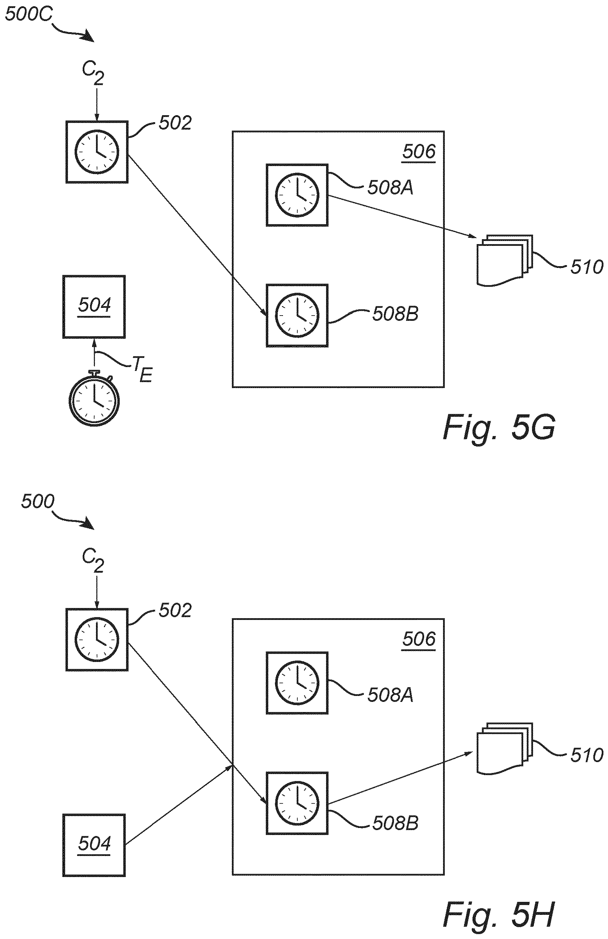

In an alternative arrangement 500C shown in figure 5G, the clock-follower unit 506 may not send an indication I_{CF} that it has completed calibration. Instead, the clock-leader unit 504 may await a signal T_{E} from the expiry of a timer 512.

Once the clock-leader unit 504 has obtained a confirmation that the clock-follower unit(s) 506 has completed calibration, the clock-leader unit 504 may send an instruction to the clock-follower unit(s) to follow the new clock signal C₂.

The clock-follower unit 506 may monitor for an instruction to follow a new clock signal C₂, as shown in step 412 of the method 400 illustrated in figure 4. As shown in step 414, and whilst the clock-follower unit 506 has not yet received an instruction to follow the new clock signal (step 412: N), the clock-follower unit may perform time operations using the first internal clock 508A, for example whilst in hold-over mode, as described above.

Then, when the clock-follower unit 506 receives an instruction to follow the new clock signal C₂ (step 412: Y), the clock-follower unit 506 may transition to performing time operations, i.e. timestamping records 510, following the new clock signal C₂, as illustrated in figure 5H, and see step 416 in the method 400 of figure 4.

As shown in figure 5H, the clock-follower unit 506 may transition from timestamping the records 510 using the first internal clock 508A in hold-over mode to timestamping the records 510 using the second internal clock 508B following the new clock signal C₂ provided by the station clock 502.

The method 400 may then repeat if a further change to the clock signal C₂ is detected, although it will be appreciated that, in such a repeated performance of the method, the first internal clock 508A and the second internal clock 508B may swap their functions as described above.

The foregoing description of the method 400 performed by the clock-follower unit 506 may be performed by each clock-follower unit in a plurality of clock-follower units. The plurality of clock-follower units may all take their clock signal from the station clock 502 and be in communication with the clock-leader unit 504.

As the clock-leader unit 504 will await confirmation that all of the clock-follower units have completed calibration before instructing the clock-follower units to start following the new clock signal C₂, it can be ensured that the timestamping of records performed by respective devices acting as clock-follower units can stay substantially in synchronization with each other even during a resynchronization process. Thus, the risk of faults or false detections thereof may be advantageously reduced.

Whilst the present disclosure is susceptible to various modifications and alternative forms, specific embodiments are shown and described above by way of example in relation to the drawings, with a view to clearly explaining the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims.

## Claims

1. A computer-implemented method for synchronizing clocks in power grid devices, the method being performed by a clock-leader unit, the method comprising:
receiving (304) an indication of a new clock signal for a plurality of clock-follower units to follow, for use in synchronizing clocks of the plurality of clock-follower units;
sending (306) an instruction to the plurality of clock-follower units to calibrate based on the new clock signal;
obtaining a confirmation (308) that the plurality of clock-follower units has completed calibration; and
in response to obtaining the confirmation, sending (312) an instruction to the plurality of clock-follower units to follow the new clock signal.

2. The method according to claim 1, wherein obtaining a confirmation that the plurality of clock-follower units has completed calibration comprises waiting for a delay period to expire, the delay period being configured to ensure that each of the clock-follower units has time to complete calibration.

3. The method according to claim 1, wherein obtaining a confirmation that each of the clock-follower units has completed calibration comprises receiving indications from each of the clock-follower units that they have completed calibration.

4. The method according to claim 3, wherein an indication received from a clock-follower unit to indicate a completed calibration comprises an identifier of the clock-follower unit sending the indication.

5. The method according to any preceding claim, further comprising:
in response to receiving the indication of a new clock signal, instructing the plurality of clock-follower units to stop following an old clock signal.

6. The method according to claim 5, further comprising:
sending an instruction to one or more of the plurality of clock-follower units to abort a resynchronization process in response to determining that the new clock signal has a time difference relative to the old clock signal that is less than a threshold amount.

7. The method according to any preceding claim, wherein instructing the clock-follower units to follow the new clock signal comprises:
determining a transitioning time for the clock-follower units transition to following the new clock signal; and
communicating the transitioning time to the plurality of clock-follower units such that the clock-follower units transition to following the new clock signal simultaneously at the transitioning time.

8. The method according to any preceding claim, wherein the indication of the new clock signal is received:
from one of the clock-follower units; or
from an external clock signal source, which is external to the power grid devices.

9. The method according to any preceding claim, wherein:
the clock-leader unit is selected from a plurality of power grid devices based on:
a pre-assigned clock-leader status; and/or
a proximity to an external clock signal source, which is external to the power grid devices.

10. A method of time synchronizing a power grid device, the power grid device (506) comprises a first internal clock (508A) and a second internal clock (508B),
and the method is performing the followings steps:
receiving an (404) instruction to calibrate based on a new clock signal
performing time operations using the first internal clock;
calibrating the second internal clock based on the new clock signal;
receiving an instruction (412) to follow the new clock signal; and
in response to receiving the instruction to follow the new clock signal, performing time operations (416) using the second internal clock.

11. The method according to claim 10, further comprising:
following, with the first internal clock, an old clock signal;
in response to receiving an instruction to calibrate based on a new clock signal, stopping following the old clock signal.

12. A data processing device comprising means configured for carrying out the method according to any preceding claim.

13. A computer program comprising instructions which, when the program is executed by a computer, cause the computer to carry out the method according to any of claims 1 to 11.

14. A computer-readable medium comprising instructions which, when executed by a computer, cause the computer to carry out the method according to any of claims 1 to 11.

15. A power grid system comprising:
a plurality of power grid devices in data communication, each power grid device having at least one clock;
wherein at least one of the plurality of power grid devices comprises the data processing device according to claim 12.

## Patentansprüche

1. Computerimplementiertes Verfahren zum Synchronisieren von Takten in Stromnetzvorrichtungen, wobei das Verfahren durch eine Taktführungseinheit durchgeführt wird und das Verfahren Folgendes umfasst:
Empfangen (304) einer Angabe eines neuen Taktsignals, dem mehrere Taktfolgereinheiten folgen sollen, zur Verwendung beim Synchronisieren von Takten der mehreren Taktfolgereinheiten;
Senden (306) eines Befehls zu den mehreren Taktfolgereinheiten, auf der Grundlage des neuen Taktsignals zu kalibrieren;
Erhalten einer Bestätigung (308), dass die mehreren Taktfolgereinheiten eine Kalibrierung abgeschlossen haben; und
Senden (312) in Reaktion auf das Erhalten der Bestätigung eines Befehls zu den mehreren Taktfolgereinheiten, dem neuen Taktsignal zu folgen.

2. Verfahren nach Anspruch 1, wobei das Erhalten einer Bestätigung, dass die mehreren Taktfolgereinheiten eine Kalibrierung abgeschlossen haben, ein Warten umfasst, dass ein Verzögerungszeitraum abgelaufen ist, wobei der Verzögerungszeitraum konfiguriert ist, sicherzustellen, dass jede der Taktfolgereinheiten Zeit hat, eine Kalibrierung abzuschließen.

3. Verfahren nach Anspruch 1, wobei das Erhalten einer Bestätigung, dass jede der Taktfolgereinheiten eine Kalibrierung abgeschlossen hat, ein Empfangen von Angaben von sämtlichen Taktfolgereinheiten umfasst, dass sie eine Kalibrierung abgeschlossen haben.

4. Verfahren nach Anspruch 3, wobei eine Angabe, die von einer Taktfolgereinheit empfangen wurde, um eine abgeschlossene Kalibrierung anzugeben, eine Kennung der Taktfolgereinheit umfasst, die die Angabe gesendet hat.

5. Verfahren nach einem vorhergehenden Anspruch, das ferner Folgendes umfasst:
in Reaktion auf ein Empfangen der Angabe eines neuen Taktsignals Anweisen der mehreren Taktfolgereinheiten, das Folgen eines alten Taktsignals zu beenden.

6. Verfahren nach Anspruch 5, das ferner Folgendes umfasst:
Senden eines Befehls zu einer oder mehreren der mehreren Taktfolgereinheiten, einen Neusynchronisationsprozess in Reaktion auf ein Bestimmen abzubrechen, dass das neue Taktsignal eine Zeitdifferenz in Bezug auf das alte Taktsignal besitzt, die kleiner als ein Schwellenwertbetrag ist.

7. Verfahren nach einem vorhergehenden Anspruch, wobei das Anweisen der Taktfolgereinheiten, dem neuen Taktsignal zu folgen, Folgendes umfasst:
Bestimmen einer Übergangszeit damit die Taktfolgereinheiten dazu übergehen, dem neuen Taktsignal zu folgen; und
Kommunizieren der Übergangszeit zu den mehreren Taktfolgereinheiten derart, dass die Taktfolgereinheiten zur Übergangszeit gleichzeitig dazu übergehen, dem neuen Taktsignal zu folgen.

8. Verfahren nach einem vorhergehenden Anspruch, wobei die Angabe des neuen Taktsignals von Folgendem empfangen wird:
einer der Taktfolgereinheiten oder
einer externen Taktsignalquelle, die sich außerhalb der Stromnetzvorrichtungen befindet.

9. Verfahren nach einem vorhergehenden Anspruch, wobei die Taktführungseinheit aus mehreren Stromnetzvorrichtungen auf der Grundlage von Folgendem gewählt wird:
einem vorab zugewiesenen Taktführungsstatus und/oder einer Nähe zu einer externen Taktsignalquelle, die sich außerhalb der Stromnetzvorrichtungen befindet.

10. Verfahren zum zeitlichen Synchronisieren einer Stromnetzvorrichtung, wobei die Stromnetzvorrichtung (506) einen ersten internen Takt (508A) und einen zweiten internen Takt (508B) umfasst und das Verfahren ein Durchführen der folgenden Schritte ist:
Empfangen eines (404) Befehls, auf der Grundlage eines neuen Taktsignals zu kalibrieren;
Durchführen von Zeitoperationen unter Verwendung des ersten internen Takts;
Kalibrieren des zweiten internen Takts auf der Grundlage des neuen Taktsignals;
Empfangen eines Befehls (412), dem neuen Taktsignal zu folgen; und
in Reaktion auf ein Empfangen des Befehls, dem neuen Taktsignal zu folgen, Durchführen von Zeitoperationen (416) unter Verwendung des zweiten internen Takts.

11. Verfahren nach Anspruch 10, das ferner Folgendes umfasst:
Folgen mit dem ersten internen Takt einem alten Taktsignal;
in Reaktion auf ein Empfangen eines Befehls, auf der Grundlage eines neuen Taktsignals zu kalibrieren, Beenden des Folgens des alten Taktsignals.

12. Datenverarbeitungsvorrichtung, die Mittel umfasst, die konfiguriert sind, das Verfahren nach einem vorhergehenden Anspruch auszuführen.

13. Computerprogramm das Befehle enthält, die, wenn das Programm durch einen Computer ausgeführt wird, den Computer veranlassen, das Verfahren nach einem der Ansprüche 1 bis 11 auszuführen.

14. Computerlesbares Medium, das Befehle enthält, die, wenn sie durch einen Computer ausgeführt werden, bewirken, dass der Computer das Verfahren nach einem der Ansprüche 1 bis 11 ausführt.

15. Stromnetzsystem, das Folgendes umfasst:
mehrere Stromnetzvorrichtungen in Datenkommunikation, wobei jede Stromnetzvorrichtung mindestens einen Takt aufweist;
wobei mindestens eine der mehreren Stromnetzvorrichtungen die Datenverarbeitungsvorrichtung nach Anspruch 12 umfasst.

## Revendications

1. Procédé, mis en œuvre par ordinateur, de synchronisation d'horloges dans des dispositifs de réseau électrique, le procédé étant réalisé par une unité de pilotage d'horloge, le procédé comprenant :
la réception (304) d'une indication d'un nouveau signal d'horloge à suivre par une pluralité d'unités de suivi d'horloge, en vue de son utilisation dans la synchronisation d'horloges de la pluralité d'unités de suivi d'horloge ;
l'envoi (306) à la pluralité d'unités de suivi d'horloge d'une instruction de calibration sur la base du nouveau signal d'horloge ;
l'obtention d'une confirmation (308) que la pluralité d'unités de suivi d'horloge a achevé la calibration ; et en réponse à l'obtention de la confirmation, l'envoi (312) à la pluralité d'unités de suivi d'horloge d'une instruction de suivi du nouveau signal d'horloge.

2. Procédé selon la revendication 1, dans lequel l'obtention d'une confirmation que la pluralité d'unités de suivi d'horloge a achevé la calibration comprend l'attente de l'expiration d'une période de temporisation, la période de temporisation étant configurée pour faire en sorte que chacune des unités de suivi d'horloge dispose du temps nécessaire pour achever la calibration.

3. Procédé selon la revendication 1, dans lequel l'obtention d'une confirmation que chacune des unités de suivi d'horloge a achevé la calibration comprend la réception, en provenance de chacune des unités de suivi d'horloge, d'indications que celles-ci ont achevé la calibration.

4. Procédé selon la revendication 3, dans lequel une indication reçue en provenance d'une unité de suivi d'horloge pour indiquer une calibration achevée comprend un identifiant de l'unité de suivi d'horloge qui envoie l'indication.

5. Procédé selon l'une quelconque des revendications précédentes, comprenant en outre :
en réponse à la réception de l'indication d'un nouveau signal d'horloge, l'instruction donnée à la pluralité d'unités de suivi d'horloge d'arrêter de suivre un ancien signal d'horloge.

6. Procédé selon la revendication 5, comprenant en outre :
l'envoi, à une ou plusieurs de la pluralité d'unités de suivi d'horloge, d'une instruction d'abandon d'un processus de resynchronisation en réponse à la détermination que le nouveau signal d'horloge présente une différence de temps par rapport à l'ancien signal d'horloge qui est inférieure à une quantité seuil.

7. Procédé selon l'une quelconque des revendications précédentes, dans lequel l'instruction donnée aux unités de suivi d'horloge de suivre le nouveau signal d'horloge comprend :
la détermination d'un temps de transition pour la transition des unités de suivi d'horloge vers le suivi du nouveau signal d'horloge ; et
la communication du temps de transition à la pluralité d'unités de suivi d'horloge de manière à ce que les unités de suivi d'horloge transitionnent simultanément vers le suivi du nouveau signal d'horloge au temps de transition.

8. Procédé selon l'une quelconque des revendications précédentes, dans lequel l'indication du nouveau signal d'horloge est reçue :
en provenance d'une des unités de suivi d'horloge ; ou
en provenance d'une source externe de signal d'horloge, qui est externe aux dispositifs de réseau électrique.

9. Procédé selon l'une quelconque des revendications précédentes, dans lequel :
l'unité de pilotage d'horloge est choisie parmi une pluralité de dispositifs de réseau électrique sur la base de :
un statut de pilotage d'horloge préassigné ; et/ou
une proximité avec une source externe de signal d'horloge, qui est externe aux dispositifs de réseau électrique.

10. Procédé de synchronisation temporelle d'un dispositif de réseau électrique, le dispositif (506) de réseau électrique comprenant une première horloge interne (508A) et une deuxième horloge interne (508B), et le procédé réalisant les étapes suivantes :
la réception (404) d'une instruction de calibration sur la base d'un nouveau signal d'horloge ;
la réalisation d'opérations temporelles à l'aide de la première horloge interne ;
la calibration du deuxième signal d'horloge sur la base du nouveau signal d'horloge ;
la réception d'une instruction (412) de suivi du nouveau signal d'horloge ; et
en réponse à la réception de l'instruction de suivi du nouveau signal d'horloge, la réalisation d'opérations temporelles (416) à l'aide de la deuxième horloge interne.

11. Procédé selon la revendication 10, comprenant en outre :
le suivi, avec la première horloge interne, d'un ancien signal d'horloge ;
en réponse à la réception d'une instruction de calibration sur la base d'un nouveau signal d'horloge, l'arrêt du suivi de l'ancien signal d'horloge.

12. Dispositif de traitement de données comprenant des moyens configurés pour mettre en œuvre le procédé selon l'une quelconque des revendications précédentes.

13. Programme d'ordinateur comprenant des instructions qui, lorsque le programme est exécuté par un ordinateur, amènent l'ordinateur à mettre en œuvre le procédé selon l'une quelconque des revendications 1 à 11.

14. Support lisible par ordinateur comprenant des instructions qui, lorsqu'elles sont exécutées par un ordinateur, amènent l'ordinateur à mettre en œuvre le procédé selon l'une quelconque des revendications 1 à 11.

15. Système de réseau électrique, comprenant :
une pluralité de dispositifs de réseau électrique en communication de données, chaque dispositif de réseau électrique étant doté d'au moins une horloge ;
dans lequel au moins un de la pluralité de dispositifs de réseau électrique comprend le dispositif de traitement de données selon la revendication 12.
